(19) Europäisches Patentamt / European Patent Office / Office européen des brevets

(11) **EP 2 514 794 A1**

(12) **EUROPEAN PATENT APPLICATION**

(43) Date of publication:
24.10.2012 Bulletin 2012/43

(51) Int Cl.:
*C09J 133/06* (2006.01)    *C09J 7/02* (2006.01)
*H01M 2/08* (2006.01)    *H01M 4/66* (2006.01)
*H01M 2/02* (2006.01)    *H01M 2/04* (2006.01)
*H01M 2/16* (2006.01)

(21) Application number: 11186277.7

(22) Date of filing: 24.10.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 20.04.2011 JP 2011093784
20.04.2011 JP 2011093785

(71) Applicant: Nitto Denko Corporation
Ibaraki-shi
Osaka 567-8680 (JP)

(72) Inventors:
• Hanai, Hiroomi
Ibaraki-shi, Osaka 567-8680 (JP)
• Kawanishi, Michirou
Ibaraki-shi, Osaka 567-8680 (JP)

(74) Representative: Grünecker, Kinkeldey,
Stockmair & Schwanhäusser
Leopoldstrasse 4
80802 München (DE)

(54) **Pressure-sensitive adhesive tape for electrochemical device**

(57)    To provide a pressure-sensitive adhesive tape for an electrochemical device that has an excellent adhesive strength and that achieves, for example, the protection of an electrode, the suppression of active material separation, and the fixing of a wound end of a laminate composed of electrode plates, a separator, and the like when the laminate is wound and packed into a battery case, without adversely affecting the electrochemical device.

The pressure-sensitive adhesive tape for an electrochemical device of the present invention includes a pressure-sensitive adhesive layer composed of an acrylic pressure-sensitive adhesive on at least one side of a plastic base. The acrylic pressure-sensitive adhesive includes an acrylic polymer that is obtained by polymerization of a monomer component containing at least an alkyl (meth)acrylate and a hydroxyl group-containing monomer. The acrylic polymer has an acid value of 1.0 or less and a glass transition temperature (Tg) of -40°C or more.

[Fig. 3]

**Description**

[Technical Field]

The present invention relates to pressure-sensitive adhesive tapes for electrochemical devices, and in particular, relates to pressure-sensitive adhesive tapes used for parts that are in contact with an electrolytic solution or may be in contact with an electrolytic solution during the assembly of electrolytic condensers and lithium-ion batteries.

[Background Art]

Electrochemical devices use many pressure-sensitive adhesive tapes in their production process. For example, in the production process of lithium-ion batteries, pressure-sensitive adhesive tapes are used for various purposes such as the prevention of separator penetration due to a foreign matter, a burr, or the like, the suppression of active material separation, and the fixing of the wound end of a laminate composed of electrode plates, a separator, and the like when the laminate is wound and packed into a battery case.

The pressure-sensitive adhesive tape used in the production process of an electrochemical device is mainly composed of a base and a pressure-sensitive adhesive layer. For a pressure-sensitive adhesive constituting the pressure-sensitive adhesive layer, an acrylic polymer that is obtained by copolymerization of an alkyl (meth)acrylate and a functional group-containing monomer is commonly used because such a polymer can achieve excellent adhesiveness by cross-linkages by an external cross-linking agent. That is because, if a pressure-sensitive adhesive tape is removed in an electrolytic solution, an active material is separated as well as a pressure-sensitive adhesive component is eluted into the electrolytic solution and reacted with an electrolyte to reduce electrolytic solution characteristics, and the battery characteristics are consequently reduced (for example, Patent Document 1).

However, even when a pressure-sensitive adhesive tape having an excellent adhesiveness is used, troubles may be caused in an electrochemical device to reduce the lifetime of the electrochemical device.

[Citation List]

[Patent Literature]

Patent Document 1: Japanese Unexamined Patent Application No. 11-176476

[Summary of Invention]

[Technical Problem]

Therefore, it is an object of the present invention to provide a pressure-sensitive adhesive tape for an electrochemical device that has excellent adhesive strength and that achieves, for example, the protection of an electrode, the suppression of active material separation, and the fixing of a wound end of a laminate composed of electrode plates, a separator, and the like when the laminate is wound and packed into a battery case, without adversely affecting the electrochemical device.

[Solution to Problem]

The inventors of the present invention have been carried out intensive studies in order to solve the problems, and as a result, have found that a carboxyl group-containing monomer (for example, acrylic acid), which is commonly used as a functional group-containing monomer together with an alkyl (meth)acrylate for forming an acrylic polymer that constitutes a pressure-sensitive adhesive layer in the pressure-sensitive adhesive tape used in the production process of an electrochemical device, may not completely copolymerized during the polymerization to leave a small amount of the monomer, and consequently the use of a pressure-sensitive adhesive tape that contains such a residual monomer for assembling an electrochemical device causes corrosion of the electrochemical device.

It has been also found that the acrylic polymer that is obtained by copolymerization of the carboxyl group-containing monomer has a high water absorption rate and readily holds water in a pressure-sensitive adhesive layer, and thus, when a pressure-sensitive adhesive tape including a pressure-sensitive adhesive layer composed of the acrylic polymer that is obtained by the copolymerization of the carboxyl group-containing monomer is used especially in the production process of a lithium-ion battery, the electrode reaction is suppressed and the battery capacity is reduced because the lithium-ion battery includes the electrolytic solution containing a lithium salt having high reactivity, and hence the lithium salt immediately reductively decomposes water that is released into the electrolytic solution, as well as the carboxyl group-containing monomer degrades a nonaqueous electrolytic solution to reduce electrolytic solution characteristics, consequently the battery performance is reduced, and the battery lifetime is shortened.

Then, it has been found that, in the acrylic polymer that is included in the acrylic pressure-sensitive adhesive constituting the pressure-sensitive adhesive layer of the pressure-sensitive adhesive tape for an electrochemical device and that is obtained by copolymerization of an alkyl (meth)acrylate and a functional group-containing monomer, the use of a hydroxyl group-containing monomer as the functional group-containing monomer and the use of the carboxyl group-containing monomer in a limited amount maintain an excellent adhesive strength, can prevent corrosion of an electrochemical device due to the carboxyl group-containing monomer remaining in the pressure-sensitive adhesive layer in the pressure-sensitive adhesive tape, can lower a water absorption rate of the pressure-sensitive adhesive tape, and can suppress troubles in an electrochemical device that are caused by water contained in the pressure-sensitive adhesive tape itself that the control of a glass transition temperature (Tg) of the acrylic polymer to a particular range achieves an excellent shear adhesiveness; and that a pressure-sensitive adhesive tape having these features is extremely useful for electrochemical devices. The present invention has been completed based on the findings.

That is, the present invention provides a pressure-sensitive adhesive tape for an electrochemical device that includes a pressure-sensitive adhesive layer composed of an acrylic pressure-sensitive adhesive on at least one side of a plastic base. The acrylic pressure-sensitive adhesive includes an acrylic polymer obtained by polymerization of a monomer component containing at least an alkyl (meth)acrylate and a hydroxyl group-containing monomer. The acrylic polymer has an acid value of 1.0 or less and a glass transition temperature (Tg) of -40°C or more.

It is preferable that the pressure-sensitive adhesive tape for an electrochemical device has a shear adhesive strength of 20 N/cm$^2$ or more at 23°C.

It is preferable that the acrylic pressure-sensitive adhesive includes the acrylic polymer and 1 to 15 parts by weight of an isocyanate crosslinking agent based on 100 parts by weight of the acrylic polymer.

[Advantageous Effects of Invention]

The pressure-sensitive adhesive tape for an electrochemical device of the present invention has an excellent shear adhesive strength, can prevent corrosion of an electrochemical device, has an extremely low water absorption rate, and can suppress troubles in an electrochemical device that are caused by water contained in the pressure-sensitive adhesive tape itself. Therefore, it is applied to electrochemical devices, in particular, it is applied in the production of lithium-ion batteries to an area that is immersed in an electrolytic solution or an area that may be in contact with an electrolytic solution, and hence can suppress the degradation of battery performance and the reduction of battery lifetime as well as can achieve the prevention of separator penetration due to a foreign matter, a burr, or the like, the suppression of active material separation, and the improvement of suitable packing of an electrode into a battery case.

[Brief Description of Drawings]

Fig. 1 is a schematic cross-sectional view showing an example of the pressure-sensitive adhesive tape for an electrochemical device of the present invention.
Fig. 2 is a schematic cross-sectional view showing another example of the pressure-sensitive adhesive tape for an electrochemical device of the present invention.
Figs. 3 are schematic views showing usage examples of the pressure-sensitive adhesive tape for an electrochemical device of the present invention in a lithium-ion battery; Fig. (3-1) is a figure before use; Fig. (3-2) is a figure of the pressure-sensitive adhesive tapes for an electrochemical device of the present invention that are bonded to an electrode plate and the like; and Fig. (3-3) is a figure of a wound electrode plate that is fixed with the pressure-sensitive adhesive tape for an electrochemical device of the present invention.
Fig. 4 is a schematic view showing tensile directions of a pressure-sensitive adhesive tape and an adherend for the measurement of shear adhesive power of the pressure-sensitive adhesive tape.

[Description of Embodiments]

Hereinafter, embodiments of the present invention will be described in detail with reference to drawings as necessary.

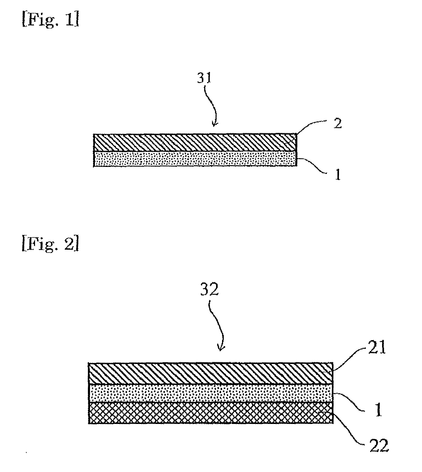

Fig. 1 is a schematic cross-sectional view showing an example of the pressure-sensitive adhesive tape for an electrochemical device of the present invention. The pressure-sensitive adhesive tape 31 for an electrochemical device has a structure including a pressure-sensitive adhesive layer 2 stacked on one side of a base 1.

Fig. 2 is a schematic cross-sectional view showing another example of the pressure-sensitive adhesive tape for an electrochemical device of the present invention. The pressure-sensitive adhesive tape 32 for an electrochemical device has a structure including a pressure-sensitive adhesive layer 21 stacked on one side of a base 1 and a pressure-sensitive adhesive layer 22 stacked on the other side.

[Pressure-sensitive adhesive layer]

The pressure-sensitive adhesive layer of the present invention is composed of an acrylic pressure-sensitive adhesive. The acrylic pressure-sensitive adhesive includes an acrylic polymer (copolymer) obtained by polymerization of a monomer component that mainly includes an alkyl (meth)acrylate as a base polymer and at least includes a functional group-containing monomer for improving the adhesiveness with the main monomer.

Examples of the alkyl (meth)acrylate include alkyl (meth)acrylates containing a straight or branched chain alkyl group having 30 or less carbon atoms, such as a methyl group, an ethyl group, a propyl group, an isopropyl group, an n-butyl group, a t-butyl group, an isobutyl group, an amyl group, an isoamyl group, a hexyl group, a heptyl group, a cyclohexyl group, a 2-ethylhexyl group, an octyl group, an isooctyl group, a nonyl group, an isononyl group, a decyl group, an isodecyl group, an undecyl group, a lauryl group, a tridecyl group, a tetradecyl group, a stearyl group, an octadecyl group, and a dodecyl group. These compounds may be used singly or in combination of two or more of them. In the present specification, "(meth)acrylate" means "acrylate" and/or "methacrylate".

It is preferable that the amount of the alkyl (meth)acrylate is 80% by weight or more (preferably 90% by weight or more and particularly preferably 95% by weight or more) based on the total weight (100% by weight) of the monomer component constituting the acrylic polymer.

In the invention, among them, it is preferable that the content of alkyl (meth)acrylates containing a straight or branched chain alkyl group having 3 or less carbon atoms is 60% by weight or more (preferably 65% by weight or more) based on the total weight (100% by weight) of the monomer component constituting the acrylic polymer, and that the content of alkyl (meth)acrylates containing a straight or branched chain alkyl group having 5 or more carbon atoms is 40% by weight or less (preferably 35% by weight or less) based on the total weight (100% by weight) of the monomer component constituting the acrylic polymer, from the viewpoint of improving shear adhesive strength.

The invention is characterized by using a hydroxy group-containing monomer as the functional group-containing monomer. Examples of the hydroxy group-containing monomer include hydroxyalkyl (meth)acrylates such as 2-hydroxyethyl (meth)acrylate, 2-hydroxypropyl (meth)acrylate, 3-hydroxypropyl (meth)acrylate, 4-hydroxybutyl (meth)acrylate, and 6-hydroxyhexyl (meth)acrylate; vinyl alcohol; and allyl alcohol. These monomers may be used singly or in combination of two or more of them.

The content of the functional group-containing monomer is, for example, about 1 to 10% by weight (preferably about 1 to 7% by weight and particularly preferably about 1 to 5% by weight) based on the total weight (100% by weight) of the monomer component constituting the acrylic polymer. The functional group-containing monomer having a content less than the range is likely to reduce the adhesiveness. The functional group-containing monomer having a content more than the range is likely to lead to gelation during polymerization.

The monomer component constituting the acrylic polymer of the present invention may include other copolymerizable monomers in addition to the main monomer and the functional group-containing monomer. Examples of the copolymerizable monomer include (meth)acrylamide; (N-substituted) amide monomers such as, N,N-dimethyl(meth)acrylamide, N-butyl(meth)acrylamide, N-methylol(meth)acrylamide, and N-methylolpropane(meth)acrylamide; alkylaminoalkyl (meth)acrylate monomers such as aminoethyl (meth)acrylate, N,N-dimethlyaminoethyl (meth)acrylate, and t-butylaminoethyl (meth)acrylate; alkoxyalkyl (meth)acrylate monomers such as methoxyethyl (meth)acrylate and ethoxyethyl (meth)acrylate; maleimide monomers such as N-cyclohexylmaleimide, N-isopropylmaleimide, N-laurylmaleimide, and N-phenylmaleimide; itaconimide monomers such as N-mothylitaconimide, N-ethylitaconimide, N-butylitaconimide, N-octylitaconimide, N-2-ethylhexylitaconimide, N-cyclohexylitaconimide, and N-laurylitaconimide; succinimide monomers such as N-(meth)acryloyloxymethylenesuccinimide, N-(meth)acryloyl-6-oxyhexamethylenesuccinimide, and N-(meth)acryloyl-8-oxyoctamethylenesuccinimide. These monomers may be used singly or in combination of two or more of them.

Examples of the copolymerizable monomer further include vinyl monomers such as vinyl propionate, N-vinylpyrrolidone, methylvinylpynolidone, vinylpyridine, vinylpiperidone, vinylpyrimidine, vinylpiperazine, vinylpyrazine, vinylpyrrole, vinylimidazole, vinyloxazole, vinylmorpholine, N-vinylearboxylic amides, styrene, $\alpha$-methylstyrene, and N-vinylcaprolactam; cyanoacrylate monomers such as (meth)acrylonitrile; epoxy group-containing acrylic monomers such as glycidyl (meth)acrylate; glycol acrylate monomers such as polyethylene glycol (meth)acrylate, polypropylene glycol (meth)acrylate, methoxyethylene glycol (meth)acrylate, and methoxypolypropylene glycol (meth) acrylate and tetrahydrofurfuryl (meth)acrylate, fluorine (meth)acrylate, silicone (meth)acrylate, and 2-methoxyethyl acrylate. These monomers may be used singly or in combination of two or more of them.

The copolymerizable monomer may be used, for example, for reforming adhesive characteristics as necessary. The amount to be used is preferably, for example, about 50 parts by weight or less based on 100 parts by weight of the alkyl (meth)acrylate from the viewpoint of the stability during polymerization of the acrylic polymer.

As another copolymerizable monomer, a polyfunctional monomer may be used as necessary for cross-linking the acrylic polymer. Examples of the polyfunctional monomer include hexanediol di(meth)acrylate, polyethylene glycol di(meth)acrylate, polypropylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, and urethane acrylate. These monomers may be used singly or in combination of two or more of them.

The amount of the polyfunctional monomer is preferably, for example, 30 parts by weight or less based on 100 parts by weight of the alkyl (meth)acrylate from the viewpoint of the stability during polymerization of the acrylic polymer.

The acrylic polymer can be prepared by polymerization of the monomer component in accordance with a known or common polymerization method such as solution polymerization, emulsification polymerization, bulk polymerization, and polymerization by irradiation with active energy rays (active energy ray polymerization). Among them, the solution polymerization and the active energy ray polymerization are preferred and the solution polymerization is more preferred because such methods can produce a polymer having excellent transparency and water resistance and are low cost.

The solution polymerization may employ various common solvents. Examples of such solvents include organic solvents including esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketones such as methyl ethyl ketone and methyl isobutyl ketone. These solvents may be used singly or in combination of two or more of them.

The polymerization of the monomer component may employ a polymerization initiator. The polymerization initiator is not necessarily limited and can be suitably selected from known or common initiators for use. Examples of polymerization initiator include oil-soluble polymerization initiators including azo polymerization initiators such as 2,2'-azobisisobutyronitrile (AIBN), 2,2'-azobis(4-methoxy-2,4-dimethylvaleronitrile), 2,2'-azobis(2,4-dimethylvaleronitrile), 2,2'-azobis(2-methylbutylonitrile), 1,1'-azobis(cyclohexane-1-carbonitrile), 2,2'-azobis(2,4,4-trimethylpentane), and dimethyl 2,2'-azobis(2-methylpropionate); and peroxide polymerization initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, and 1,1-bis(t-butylperoxy)cyclododecane. These polymerization initiators may be used singly or in combination of two or more of them. The amount of the polymerization initiator is not specifically limited and may be in a range for a common polymerization initiator.

The acrylic polymer of the present invention has an acid value of 1.0 or less (preferably 0 to 0.8 and particularly preferably 0 to 0.5). The acrylic polymer having an acid value more than the range is likely to interfere with the prevention of corrosion of an electrochemical device. The pressure-sensitive adhesive tape including such an acrylic polymer readily absorbs water and is likely to interfere with the suppression of troubles in an electrochemical device that are caused by water contained in the pressure-sensitive adhesive tape itself. The acid value of the acrylic polymer can be controlled by adjusting the content of a carboxyl group-containing monomer in the monomer component constituting the acrylic polymer.

The acrylic polymer of the present invention has a glass transition temperature (Tg) of -40°C or more (preferably -40 to -20°C). The acrylic polymer having a glass transition temperature (Tg) of less than -40°C reduces the shear adhesive strength and is likely to lead to insufficient fixing of the wound end of a laminate composed of electrode plates, a separator, and the like when the laminate is wound and packed into a battery case in the production of a lithium-ion battery. The glass transition temperature (Tg) of the acrylic polymer can be controlled by adjusting the carbon number of an alkyl chain contained in the acrylic polymer.

The acrylic polymer of the present invention has, for example, a weight average molecular weight of about 300,000 to 1,200,000 and preferably about 300,000 to 1,000,000. The acrylic polymer having a weight average molecular weight of less than 300,000 cannot achieve adhesive power and cohesive power that are required for the pressure-sensitive adhesive layer, and is likely to reduce the durability. The acrylic polymer having a weight average molecular weight of more than 1,200,000 increases the viscosity of the pressure-sensitive adhesive composition and may cause problems such as poor coating properties.

The weight average molecular weight (Mw) of the acrylic polymer can be determined by gel permeation chromatography (GPC). More specifically, it can be determined by using a GPC measurement device, trade name "HLC-8120GPC" (manufactured by TOSOH CORPORATION), under the following GPC measurement conditions in terms of polystyrene molecular weight.

<Measurement Conditions for GPC>

Sample concentration: 0.2% by weight (in a tetrahydrofuran solution)

Sample injection volume: 10 $\mu$L
Eluant: tetrahydrofuran (THF)
Flow rate: 0.6 mL/min
Column temperature (measurement temperature): 40°C
Column: trade name "TSKgel SuperHM-H/H4000/H3000/H2000" (manufactured by TOSOH CORPORATION)
Detector: differential refractive index detector (RI)

The acrylic polymer of the present invention is preferably cross-linked by a suitable cross-linking means (for example, the addition of a cross-linking agent). The cross-linking treatment can provide, to the pressure-sensitive adhesive tape, a more excellent shear adhesive strength (for example, 20 N/cm$^2$ or more, specifically 25 N/cm$^2$ or more, and particularly 30 N/cm$^2$ or more).

Examples of the cross-linking agent includes an epoxy compound, an isocyanate compound, a metal chelate compound, a metal alkoxide, a metal salt, an amine compound, a hydrazine compound, and an aldehyde compound. These cross-linking agents can be selected for use depending on a functional group contained in the acrylic polymer. In the invention, among them, the isocyanate compound is preferably used from the viewpoint of excellent anchoring properties to a plastic base.

Examples of the isocyanate compound include polyfunctional isocyanate compounds such as a bifunctional isocyanate compound and a trifunctional isocyanate compound. Examples of the bifunctional isocyanate compound include lower aliphatic diisocyanates such as butylene diisocyanate and hexamethylene diisocyanate; alicyclic diisocyanates such as cyclopentylene diisocyanate, cyclohexylene diisocyanate, and isophorone diisocyanate; and aromatic diisocyanates such as 2,4-tolylene diisocyanate, 4,4'-diphenylmethane diisocyanate, and xylylene diisocyanate. Examples of the trifunctional isocyanate compound include isocyanate adducts such as a trimethylolpropane/tolylene diisocyanate trimer adduct (trade name "CORONATE L", manufactured by NIPPON POLYURETHANE INDUSTRY CO., LTD.), a trimethylolproane/hexamethylene diisocyanate trimer adduct (trade name "CORONATE HL", manufactured by NIPPON POLYURETHANE INDUSTRY CO., LTD.), and an isocyanurate of hexamethylene diisocyanate (trade name "CORONATE HX", manufactured by NIPPON POLYURETHANE INDUSTRY CO., LTD.). These compounds may be used singly or in combination of two or more of them.

For the cross-linking agent in the present invention, the trifunctional isocyanate compound is preferred because it has excellent reactivity and can cure a polymer more immediately.

The amount of the cross-linking agent is, for example, about 1 to 15 parts by weight and preferably about 1 to 10 parts by weight based on 100 parts by weight of the acrylic polymer. The cross-linking agent having an amount less than the range leads to insufficient cross-linkages by the cross-linking agent to reduce the cohesive power of the pressure-sensitive adhesive composition and may not achieve sufficient shear adhesive power. The cross-linking agent having an amount more than the range leads to an excessively large cohesive power of the polymer and is likely to reduce the tackiness.

The acrylic pressure-sensitive adhesive in the present invention may include other components (for example, a tackifier, a plasticizer, a filler, and an antioxidant) in addition to the acrylic polymer and the cross-lining agent.

The pressure-sensitive adhesive layer of the present invention can be formed as follows: the acrylic pressure-sensitive adhesive is diluted using a solvent (for example, toluene, xylene, ethyl acetate, and methyl ethyl ketone) as necessary to prepare a coating liquid; and the coating liquid is applied onto a base directly or onto an appropriate separator (for example, a release paper) and dried.

The pressure-sensitive adhesive layer of the present invention may be a single layer or a laminate of two or more layers. When the pressure-sensitive adhesive layer is the laminate of two or more layers, each layer may have the same composition or layers having different compositions may be combined for the lamination. When the base has the piessune-sensitive adhesive layers on both sides, these pressure-sensitive adhesive layers may have the same composition or different compositions.

The pressure-sensitive adhesive layer of the present invention has a thickness (total thickness for a laminate of two or more layers) of 1 to 15 $\mu$m (preferably 1 to 10 $\mu$m). The pressure-sensitive adhesive layer having a thickness less than the range reduces the adhesive strength, and the pressure-sensitive adhesive tape may be removed in an electrolytic solution to degrade the electrolytic solution. The pressure-sensitive adhesive layer having a thickness more than the range leads to an excess volume in an electrochemical device to interfere with the achievement of higher capacity of the electrochemical device.

[Base]

The present invention is characterized by using a plastic base for the base. Examples of the material of the plastic base include polyesters (for example, polyethylene terephthalate, polyethylene naphthalate, polybutylene terephthalate, and polybutylene naphthalate), polyolefins (for example, polyethylene, polypropylene, polymethylpentene, and an ethylene-propylene copolymer), polyvinyl alcohol, polyvinylidene chloride, polyvinyl chloride, a vinyl chloride-vinyl acetate copolymer, polyvinyl acetate, polyamide, polyimide, celluloses, a fluorine resin, polyether, polyether amide, polyether nitrile, polyether ether ketone, polyphenylene sulfide, polystyrene resins (for example, polystyrene), polycarbonate, and polyethersulfone. These materials may be used singly or in combination of two or more of them.

In the invention, among them, the base is preferably formed from a resin material selected form polyimide, polyesters such as polyethylene terephthalate, and polyolefins such as polypropylene from the viewpoint of excellent heat resistance.

The base of the present invention may be a single layer or a laminate of two or more layers. When the base is the laminate of two or more layers, each layer may have the same composition, or layers having different compositions may be combined for the lamination.

The base may have a surface that is subjected to a common surface treatment, for example, oxidation treatment by a chemical or physical method such as chromate treatment, exposure to ozone, exposure to flame, exposure to high-voltage electric shock, and treatment with ionizing radiation, as necessary, in order to improve the adhesion with the pressure-sensitive adhesive layer and the like.

The thickness of the base is not necessarily limited, but is, for example, about 25 $\mu$m or less (preferably about 5 to 25 $\mu$m). The base having a thickness more than the range is likely to lead to an excess volume in an electrochemical device to interfere with the achievement of higher capacity of the electrochemical device. The base having an excessively small thickness may lead to insufficient strength of the pressure-sensitive adhesive tape to interfere with practical use.

[Pressure-sensitive adhesive tape for electrochemical device]

The pressure-sensitive adhesive tape for an electrochemical device of the present invention includes the pressure-sensitive adhesive layer on at least one side of the base. The pressure-sensitive adhesive tape for an electrochemical device of the present invention can be formed by a known or common method. For example, the acrylic pressure-sensitive adhesive to constitute the pressure-sensitive adhesive layer is diluted using a solvent (for example, toluene, xylene, ethyl acetate, and methyl ethyl ketone) as necessary to prepare a coating liquid; and the coating liquid is directly applied onto the base to form a pressure-sensitive adhesive layer; or the coating liquid is applied onto an appropriate separator (for example, a release paper) to form a pressure-sensitive adhesive layer, and the pressure-sensitive adhesive layer is transferred onto the base. The formation by transferring may leave a void (space) in the interface with the base. In this case, the pressure-sensitive adhesive tape may be treated with heat and pressure using an autoclave or the like to diffuse the void for disappearance.

The application of the coating liquid may employ a common coater such as a gravure roll coater, a reverse roll coater, a kiss roll coater, a dip roll coater, a bar coater, a knife coaster, a spray coater, a comma coater, and a direct coater.

Alternatively, the pressure-sensitive adhesive tape for an electrochemical device of the present invention can be formed by melt extrusion of the base material and the acrylic pressure-sensitive adhesive to integrate each other. For the melt extrusion, any of known techniques such as inflation method and T-die method may be employed. After the extrusion, a stretching treatment in a longitudinal or transverse direction (uniaxial stretching) or a sequential or simultaneous stretching treatment in longitudinal and transverse directions (biaxial stretching) may be carried out.

The pressure-sensitive adhesive tape for an electrochemical device of the present invention can be bonded to an adherend by pressing, for example, at a pressure of about 0.5 to 10 kg/cm$^2$. The temperature during the pressing is not necessarily limited and is, for example, about 10 to 180°C.

The adhesive strength (with respect to an aluminum foil) after the pressing is, for example, a 180 degree peel adhesion to an aluminum foil at 25°C (in accordance with Japanese Industrial Standard Z 0237, with respect to an aluminum foil, a peeling rate of 300 mm/min, adhesive strength before immersion) of about 0.5 N/10 mm or more (preferably 1.0 N/10 mm or more and particularly preferably 1.05 to 2.5 N/10 mm).

The adhesive strength (with respect to an aluminum foil) of the pressure-sensitive adhesive tape for an electrochemical device of the present invention after the immersion in a mixed solvent of ethylene carbonate/diethyl carbonate [the former/the latter (volume ratio) = 1/1] at 60°C for 8 hours is, for example, a 180 degree peel adhesion (in accordance with Japanese Industrial Standard Z 0237, with respect to an aluminum foil, a peeling temperature of 25°C, a peeling rate of 300 mm/min, adhesive strength after immersion) of 0.5 N/10 mm or more [preferably 1.0 N/10 mm or more (for example, 1.0 to 2.5 N/10 mm)]. The pressure-sensitive adhesive tape having an adhesive strength to an aluminum foil after immersion less than the range is readily removed in an electrolytic solution when it is used in an lithium-ion battery, and thus interferes with the suppression of degradation of the electrolytic solution.

The pressure-sensitive adhesive tape for an electrochemical device of the present invention preferably has a shear adhesive strength at 23°C of 20 N/cm$^2$ or more (specifically 25 N/cm$^2$ or more and particularly 30 N/cm$^2$ or more). The pressure-sensitive adhesive tape having a shear adhesive strength at 23°C less than the range is likely to lead to insufficient fixing of the wound end of a laminate composed of electrode plates, a separator, and the like when the laminate is wound and packed into a battery case in the production of a lithium-ion battery.

The pressurr-sensitive adhesive tape for an electrochemical device of the present invention may include a separator (release liner) on the surface of the pressure-sensitive adhesive layer in order to protect the pressure-sensitive adhesive layer surface and to prevent blocking. The separator is removed when the pressure-sensitive adhesive tape for an electrochemical device of the present invention is bonded to an adherend, and is not necessarily included. The separator to be used is not specifically limited, and known or common release papers and the like may be used. Examples of the separator to be used include bases having release layers such as a plastic film and paper having a surface treated with a release agent such as a silicone release agent, a long-chain alkyl release agent, a fluorine release agent, and a molybdenum sulfide release agent; low adhesive bases composed of fluorine polymers such as polytetrafluoroethylene, polychlorotrifluoroethylene, polyvinyl fluoride, polyvinylidene fluoride, a tetrafluoroethylene-hexafluoropropylene copolymer, and a chlorofluoroethylene-vinylidene fluoride copolymer; and low adhesive bases composed of non-polar polymers such as an olefinic resin (for example, polyethylene and polypropylene).

When the pressure-sensitive adhesive tape for an electrochemical device of the present invention is a double-sided pressure-sensitive adhesive tape, the separators may be provided on faces of both pressure-sensitive adhesive layers of the pressure-sensitive adhesive tape for an electrochemical device of the present invention; or the separator having a back release layer may be provided on one adhesive face, and the sheet is wound so that the back release layer of the separator will be in contact with the other face of the pressure-sensitive adhesive layer.

The pressure-sensitive adhesive tape for an electrochemical device of the present invention is suitably used, for example, for the production of a secondary battery including a nonaqueous electrolytic solution, such as a lithium-ion battery.

Examples of the nonaqueous electrolytic solution include, but are not necessarily limited to, an electrolytic solution of a lithium salt such as $LiPF_6$ as an electrolyte dissolved in a mixed solvent of a cyclic carbonate such as propylene carbonate (PC) and ethylene carbonate (EC) and a chain carbonate such as dimethyl carbonate (DMC), ethyl methyl carbonate (EMC), and diethyl carbonate (DEC).

The nonaqueous electrolyte secondary battery such as a lithium-ion battery is composed of an outer can that includes a stacked electrode group in which a positive electrode plate having a positive electrode substrate coated with a positive electrode active material and a negative electrode plate having a negative electrode substrate coated with a negative electrode active material are stacked interposing a separator, or a wound electrode group in which a positive electrode plate having a positive electrode substrate coated with a positive electrode active material and a negative electrode plate having a negative electrode substrate coated with a negative electrode active material are spirally wound interposing a separator while opposing to each other, and electrode terminals out from the positive electrode plate and the negative electrode plate, and an electrolytic solution.

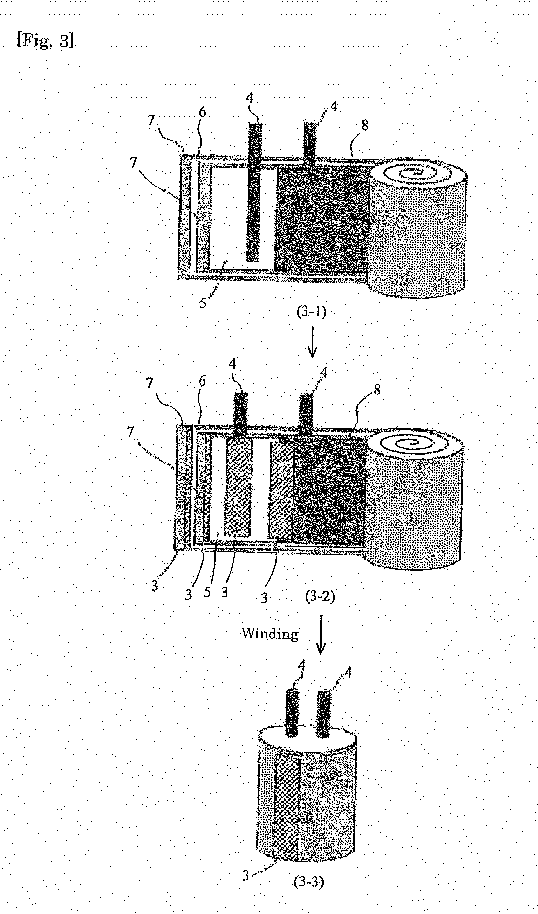

The pressure-sensitive adhesive tape for an electrochemical device of the present invention can be used, for example, in the production of the nonaqueous electrolyte secondary battery such as the lithium-ion battery, to bond members constituting the battery, for example, in order to prevent separator penetration by a foreign matter, a burr, or the like, in order to suppress active material separation, and in order to improve suitable packing of the electrode into the battery case (for example, to fix a laminate composed of the positive electrode plate/the separator/the negative electrode plate or to fix the wound laminate). The bonding position in the members constituting the battery is not specifically limited as long as the objects can be achieved, and examples include an electrode plate, an electrode terminal, an electrode plate edge, a position in a separator to be in contact with an electrode plate edge, a boundary of a coated area and an uncoated area of an active material, and the wound end of a wound electrode group (see Fig. 3).

[Examples]

Hereinafter, the present invention will be described in further detail with reference to examples, but the present invention is not intended to be limited to these examples.

Example 1

First, 70 parts by weight of ethyl acrylate, 30 parts by weight of 2-ethylhexyl acrylate, 4 parts by weight of 2-hydroxyethyl acrylate, 0.1 part by weight of 2,2'-azobisisobutyronitrile (AIBN) as an initiator, and 100 parts by weight of toluene as a solvent were mixed, and $N_2$ substitution was carried out for 2 hours. Then, polymerization was carried out at 60°C for 6 hours to give an acrylic polymer (1) having a weight average molecular weight of 400,000 and a Tg of -36.6°C.

To the obtained acrylic polymer (1), a trifunctional isocyanate compound (trade name "CORONATE L", manufactured by NIPPON POLYURETHANE INDUSTRY CO., LTD.) was mixed in a ratio of 5 parts by weight based on the solid content to give an acrylic adhesive (1).

The obtained acrylic adhesive (1) was applied onto a transparent polyimide film (trade name "Kapton 50H", manufactured by DU PONT-TORAY CO., LTD., a thickness of 12.5 $\mu$m) so as to have a thickness after drying of 10 $\mu$m and then dried to give a pressure-sensitive adhesive tape (1).

Example 2

First, 60 parts by weight of ethyl acrylate, 40 parts by weight of butyl acrylate, 2 parts by weight of 2-hydioxyethyl acrylate, 0.1 part by weight of AIBN, and 100 parts by weight of toluene were mixed, and $N_2$ substitution was carried out for 2 hours. Then, polymerization was carried out at 60°C for 6 hours to give an acrylic polymer (2) having a weight average molecular weight of 500,000 and a Tg of -34.9°C.

To the obtained acrylic polymer (2), a trifunctional isocyanate compound (trade name "CORONATE L", manufactured by NIPPON POLYURETHANE INDUSTRY CO., LTD.) was mixed in a ratio of 4 parts by weight based on the solid content to give an acrylic adhesive (2).

The obtained acrylic adhesive (2) was applied onto a transparent PET film (trade name "LUMIRROR S10", manufactured by Toray Industries Inc., a thickness of 25 $\mu$m) so as to have a thickness after drying of 10 $\mu$m and then dried to give a pressure-sensitive adhesive tape (2).

Comparative Example 1

First, 95 parts by weight of butyl acrylate, 5 parts by weight of acrylic acid, 0.1 part by weight of AIBN, and 100 parts by weight of an acetate ester as a solvent were mixed, and $N_2$ substitution was carried out for 2 hours. Then, polymerization was carried out at 60°C for 6 hours to give an acrylic polymer (3) having a weight average molecular weight of 1,200,000 and a Tg of -50.3°C.

To the obtained acrylic polymer (3), a trifunctional isocyanate compound (trade name "CORONATE L", manufactured by NIPPON POLYURETHANE INDUSTRY CO., LTD.) was mixed in a ratio of 0.5 part by weight based on the solid content to give an acrylic pressure-sensitive adhesive (3).

The obtained acrylic pressure-sensitive adhesive (3) was applied onto a transparent PET film (trade name "LUMIRROR S10", manufactured by Toray Industries Inc., a thickness of 25 $\mu$m) so as to have a thickness after drying of 10 $\mu$m and then dried to give a pressure-sensitive adhesive tape (3).

Comparative Example 2

First, 95 parts by weight of 2-ethylhexyl acrylate, 5 parts by weight of acrylic acid, 0.1 part by weight of AIBN, and 100 parts by weight of toluene as a solvent were mixed, and $N_2$ substitution was carried out for 2 hours. Then, polymerization was carried out at 60°C for 6 hours to give an acrylic polymer (4) having a weight average molecular weight of 500,000 and a Tg of "65.2°C.

To the obtained acrylic polymer (4), a trifunctional isocyanate compound (trade name "CORONATE L", manufactured by NIPPON POLYURETHANE INDUSTRY CO., LTD.) was mixed in a ratio of 5 parts by weight based on the solid content to give an acrylic pressure-sensitive adhesive (4).

The obtained acrylic pressure-sensitive adhesive (4) was applied onto a transparent PET film (trade name "LUMIRROR S10", manufactured by Toray Industries Inc., a thickness of 25 $\mu$m) so as to have a thickness after drying of 10 $\mu$m and then dried to give a pressure-sensitive adhesive tape (4).

The glass transition temperature (Tg) was calculated in accordance with the Fox-Flory equation (1).

$$1/Tg = w^1/Tg^1 + w^2/Tg^2 + w^3/Tg^3 + ... + w^{\,n}/Tg^n \ (1)$$

n: an integer of 1 or more

$w^{\,n}$: weight ratio of each monomer, $w^1 + w^2 + w^3 + ... + w^n = 1$

Tgn: glass transition temperature of a homopolymer derived from each monomer

The acid value was determined in accordance with Japanese Industrial Standard K 0070-1992 (potentiometric titration). That is, to about 3 g of a dried acrylic polymer, 100 mL of acetone was added and stirred to dissolve the polymer. To the solution, 25 mL of water was added and stirred. The solution was titrated with a 0.05 mol/L sodium hydroxide solution, and the amount (mg) of potassium hydroxide that was needed for the neutralization of 1 g of the acrylic polymer was calculated as the acid value.

Corrosion resistance performance and shear adhesive power of each pressure-sensitive adhesive tape obtained in Examples and Comparative Examples were determined in accordance with the following methods.

<Evaluation of Corrosion Resistance Performance>

Each pressure-sensitive adhesive tape obtained in Examples and Comparative Examples was cut into a size of 20 mm width and 20 mm length to prepare a test piece.

The obtained test piece was bonded to a copper foil (a thickness of 80 $\mu$m) and left in an atmosphere at 60°C and 95% RH for 5 days. Then, the bonded face of the copper foil to the test piece was visually observed from the transparent base to determine the presence or absence of corrosion.

<Measurement of Shear Adhesive Power>

Each pressure-sensitive adhesive tape obtained in Examples and Comparative Examples was cut into a size of 20 mm width and 20 mm length to prepare a test piece.

To the pressure-sensitive adhesive layer surface of the obtained test piece, a stainless steel plate (SUS304BA, polished with sandpaper #360) as an adherend was bonded by one reciprocal movement of a 5-kg roller, and then left at 23 $\pm$ 2°C for 0.5 hour.

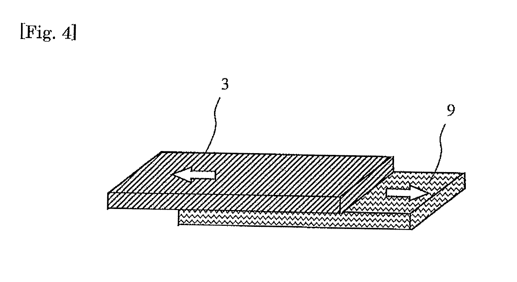

After that, in a condition at a temperature of 23 $\pm$ 2°C and a humidity of 65 $\pm$ 5% RH, the test piece and the stainless steel plate were pulled in directions different to each other (in directions opposite to each other) as shown in Fig. 4 at a pulling rate of 50 mm/min to determine the load (maximum load) as the shear adhesive power. The measured value (unit: N/400 mm$^2$) was converted in terms of N/cm$^2$.

The results are summarized in Table 1.

[Table 1]

Table 1

|  |  | Example |  | Comparative Example |  |
| --- | --- | --- | --- | --- | --- |
|  |  | 1 | 2 | 1 | 2 |
| Alkyl (meth)acrylate | Ethyl acrylate | 70 | 60 |  |  |
|  | Butyl acrylate |  | 40 | 95 |  |
|  | 2-ethylhexyl acrylate | 30 |  |  | 95 |
| Functional group·containing monomer | Acrylic acid |  |  | 5 | 5 |
|  | 2-hydroxyethyl acrylate | 4 | 2 |  |  |
| Cross-linking agent | CORONATE L | 5 | 4 | 0.5 | 5 |
| Evaluation | Glass transition temperature (Tg) | -36.6 | -34.9 | -50.3 | -65.2 |
|  | Acid value | 0.2 | 0.2 | 16 | 30 |
|  | Corrosion resistance performance | good | good | poor | poor |
|  | Shear adhesive strength (N/cm$^2$) | 25 | 40 | 18 | 15 |

[Reference Signs List]

1        Base
2, 21, 22    Pressure-sensitive adhesive layer
3, 31, 32    Pressure-sensitive adhesive tape for electrochemica device
4        Electrode terminal
5        Positive electrode plate
6        Negative electrode plate
7        Separator
8        Active material
9        Stainless steel plate (SUS304BA) as adherend

**Claims**

1. A pressure-sensitive adhesive tape for an electrochemical device comprising a pressure-sensitive adhesive layer composed of an acrylic pressure-sensitive adhesive on at least one side of a plastic base,
the acrylic pressure-sensitive adhesive including an acrylic polymer obtained by polymerization of a monomer component containing at least an alkyl (meth)acrylate and a hydroxyl group-containing monomer, and
the acrylic polymer having an acid value of 1.0 or less and a glass transition temperature (Tg) of -40°C or more.

2. The pressure-sensitive adhesive tape for an electrochemical device according to claim 1, wherein the pressure-sensitive adhesive tape has a shear adhesive strength of 20 $N/cm^2$ or more at 23°C.

3. The pressure-sensitive adhesive tape for an electrochemical device according to claim 1 or 2, wherein the acrylic pressure-sensitive adhesive includes the acrylic polymer and 1 to 15 parts by weight of an isocyanate crosslinking agent based on 100 parts by weight of the acrylic polymer.

[Fig. 1]

31

2

1

[Fig. 2]

32

21

1

22

[Fig. 3]

(3-1)

(3-2)

Winding

(3-3)

EP 2 514 794 A1

[Fig. 4]

14

Europäisches
Patentamt

European
Patent Office

Office européen
des brevets

# EUROPEAN SEARCH REPORT

Application Number

EP 11 18 6277

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 621 596 A2 (NITTO DENKO CORP [JP]) 1 February 2006 (2006-02-01) * abstract * * paragraphs [0193], [0267] - paragraph [0268]; example III * | 1-3 | INV.<br>C09J133/06<br>C09J7/02<br>H01M2/08<br>H01M4/66<br>H01M2/02 |
| X | EP 2 078 740 A1 (NITTO DENKO CORP [JP]) 15 July 2009 (2009-07-15) * example 1 * | 1-3 | H01M2/04<br>H01M2/16 |
| X | EP 1 889 887 A1 (NITTO DENKO CORP [JP]) 20 February 2008 (2008-02-20) * example 1 * | 1-3 | |
| X | US 2005/136251 A1 (KISHIMOTO TOMOKO [JP] ET AL) 23 June 2005 (2005-06-23) * examples 1,3 * | 1-3 | |
| A | HANS-GEORG ELIAS ED - HANS-GEORG ELIAS: "MAKROMOLEKULE , GRUNDLAGEN: STRUKTUR, SYNTHESE, EIGENSCHAFTEN, THERMISCHE UMWANDLUNGEN UND RELAXIATIONEN", 1 January 1990 (1990-01-01), MAKROMOLEKULE , GRUNDLAGEN: STRUKTUR, SYNTHESE, EIGENSCHAFTEN, HÜTHIG & WEPF VERLAG, BASEL HEIDELBERG NEW YORK, PAGE(S) 845 - 857, XP002594550, ISBN: 978-3-85739-101-9 * formula 22-63, Tab. 22-11 * | 1 | TECHNICAL FIELDS SEARCHED (IPC)<br><br>C09J<br>H01M |

-/--

The present search report has been drawn up for all claims

| Place of search | Date of completion of the search | Examiner |
|---|---|---|
| Munich | 30 July 2012 | Meier, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

# EUROPEAN SEARCH REPORT

**Application Number**

EP 11 18 6277

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ERICH PENZEL ET AL: "Some properties of copolymers of vinylidene chloride with acrylates and methacrylates, Part 1", ANGEWANDTE MAKROMOLEKULARE CHEMIE. APPLIED MACROMOLECULARCHEMISTRY AND PHYSICS, WILEY VCH, WEINHEIM, DE, vol. 273, no. 4703, 1 January 1999 (1999-01-01), pages 15-27, XP002594551, ISSN: 0003-3146 * table 1 * | 1 | |
| A | "Katalog Handbuch Feinchemikalien, product No 18,206-0", 1 January 1999 (1999-01-01), KATALOG HANDBUCH FEINCHEMIKALIEN, ALDRICH, PAGE(S) 1588, XP002594552, * the whole document * | 1 | |
| A | RUDOF RIESEN ET AL: "Die Glasübergangtemperatur gemessen mit verschiedenen TA-Techniken, Teil 2: Ermittlung der Glasübergangstemperaturen", INTERNET CITATION, 1 February 2003 (2003-02-01), pages 1-20, XP002594785, Retrieved from the Internet: URL:http://de.mt.com/global/de/home/suppor tive_content/usercom/TA_UserCom18.z2vUzxjP y0vKAxrVCMLHBfbHCI45nZaOnG--.MediaFileComp onent.html/tauserc18d.pdf [retrieved on 2010-08-02] * figure 2; table 1 * | 1 | TECHNICAL FIELDS SEARCHED (IPC) |

The present search report has been drawn up for all claims

| Place of search | Date of completion of the search | Examiner |
|---|---|---|
| Munich | 30 July 2012 | Meier, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 11 18 6277

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2012

| Patent document cited in search report | | Publication date | Patent family member(s) | | Publication date |
|---|---|---|---|---|---|
| EP 1621596 | A2 | 01-02-2006 | AT | 456640 T | 15-02-2010 |
| | | | CN | 1727426 A | 01-02-2006 |
| | | | CN | 102516902 A | 27-06-2012 |
| | | | EP | 1621596 A2 | 01-02-2006 |
| | | | EP | 2105484 A1 | 30-09-2009 |
| | | | EP | 2107092 A1 | 07-10-2009 |
| | | | EP | 2241604 A1 | 20-10-2010 |
| | | | EP | 2258782 A2 | 08-12-2010 |
| | | | KR | 20060046740 A | 17-05-2006 |
| | | | KR | 20090132564 A | 30-12-2009 |
| | | | KR | 20090132565 A | 30-12-2009 |
| | | | KR | 20110136760 A | 21-12-2011 |
| | | | US | 2006024494 A1 | 02-02-2006 |
| | | | US | 2008176976 A1 | 24-07-2008 |
| | | | US | 2009317635 A1 | 24-12-2009 |
| EP 2078740 | A1 | 15-07-2009 | CN | 101522846 A | 02-09-2009 |
| | | | EP | 2078740 A1 | 15-07-2009 |
| | | | JP | 2008115273 A | 22-05-2008 |
| | | | KR | 20090077037 A | 14-07-2009 |
| | | | TW | 200840851 A | 16-10-2008 |
| | | | US | 2010028588 A1 | 04-02-2010 |
| | | | WO | 2008053713 A1 | 08-05-2008 |
| EP 1889887 | A1 | 20-02-2008 | CN | 101126001 A | 20-02-2008 |
| | | | EP | 1889887 A1 | 20-02-2008 |
| | | | JP | 4849993 B2 | 11-01-2012 |
| | | | JP | 2008045011 A | 28-02-2008 |
| | | | KR | 20080015375 A | 19-02-2008 |
| | | | TW | 200808935 A | 16-02-2008 |
| | | | US | 2008038540 A1 | 14-02-2008 |
| | | | US | 2011200744 A1 | 18-08-2011 |
| US 2005136251 | A1 | 23-06-2005 | CN | 1637104 A | 13-07-2005 |
| | | | JP | 2005179496 A | 07-07-2005 |
| | | | KR | 20050062451 A | 23-06-2005 |
| | | | US | 2005136251 A1 | 23-06-2005 |
| | | | US | 2008008831 A1 | 10-01-2008 |

EPO FORM P0459

For more details about this annex : see Official Journal of the European Patent Office, No. 12/82

**EP 2 514 794 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11176476 A